# EUROPEAN PATENT SPECIFICATION

(11) **EP 2 692 664 B1**
(45) Date of publication and mention of the grant of the patent: **19.08.2015**
(21) Application number: 12720302.4
(22) Date of filing: 30.03.2012
(51) Int. Cl.: B65D 85/804

(54) **CAPSULE INCLUDING ACTUATION ELEMENT, METHOD AND DEVICE FOR PROCESSING SAID CAPSULE**
KAPSEL MIT EINEM BETÄTIGUNGSELEMENT, VERFAHREN UND VORRICHTUNG ZUM VERARBEITEN DIESER KAPSEL
CAPSULE COMPRENANT UN ELEMENT D'ACTIONNEMENT, PROCEDE ET DISPOSITIF DE TRAITEMENT DE CETTE CAPSULE

(30) Priority: 30.03.2011 PT 2011105599 U
(43) Date of publication of application: 05.02.2014
(73) Proprietor: Novadelta-Comércio e Industria de Cafés, S.A., 1900-264 Lisboa (PT)
(72) Inventor: NABEIRO, Rui Miguel, 7370-112 Campo Maior (PT); Freire Falcão Teles Caramelo, Daniel, 1400-701 Lisboa (PT)
(74) Representative: Miranda de Sousa, João Paulo Vaz
(86) International application number: PCT/PT2012/000012
(87) International publication number: WO 2012/134313

(56) References cited:
- EP-A1- 2 210 826
- EP-A2- 1 975 087
- WO-A1-2008/132571
- WO-A1-2010/137947
- WO-A1-2011/035942
- WO-A1-2011/138405
- DE-A1-102010 030 988

## Description

### Field of the Invention

The present invention refers to the field of capsules of aromatic substances used for the preparation of beverages by extraction by means of their crossing by a pressurized fluid flow, in general, and to the field of the capsules for obtaining coffee of the espresso type, in particular.

The present invention further refers to a method of processing said recipient, as well as to a device for executing this method of processing.

### Background of the Invention

There are presently known many solutions of capsules meant for use in beverage extraction machines, such as espresso coffee, including of the pod type, provided in a substantially air un-tight material, and of the capsule type, provided in substantially airtight materials. The opening of such kind of recipients, for passage of the extraction flow, raises several questions from the technical point of view, both in terms of the control upon the moments of entry and exit (and, therefore, of the flow residence period in its interior) as well as in terms of the configuration of the section of flow passage (format, dimension, distribution) for the entry and for the exit of said pressurized fluid flow. In fact, these parameters have a substantial influence upon the final quality of the beverage obtained and, in general, vary according to the type of aromatic substance being used. Moreover, it is further important to consider the set of forces required by an extraction device, notably in a respective extraction chamber, to carry out said opening of entry and exit of the capsule, as well as an eventual variation of the latter for different types of substances being used.

The solution usually practiced for the opening of the capsule relates to a certain form of rupture of a certain material used in a construction element in a certain zone of the capsule, usually as a result of the application of a certain mechanical force. Moreover, one frequently tries to use the hydraulic force generated inside the capsule by the pressurized fluid flow, to also actuate, at least in part, the exit out of it.

Document EP 1975087 presents a capsule including a tubular element disposed inside and participating in the distribution of the pressurized fluid flow, from the entry in the capsule to the exit therefrom. Also in this case the opening of the flow entry and exit is carried out by means of perforating the construction material in respective zones. Moreover, in this case, the tubular element is not actuated so as to carry out any displacement. The tubular element provides, in a passive manner, an assisting function to the flow distribution inside the capsule, but does not carry out any flow actuation function.

Document WO 2010/137947 A1 discloses a device suitable for using a capsule according to the aforementioned field.

### Brief description of the Invention

The goal of the present invention is to make a capsule available, or recipients of the capsule type, that provides better flow conditions at the entry and at the exit, thereby minimizing the associated pressure losses, a better flow distribution inside the capsule, that way maximizing the efficacy of the extraction process, as well as, in particular, a better control upon and use of the forces necessary to carry out the flow entry and exit that way better controlling the flow residence period inside the capsule, and with the possibility of adjusting the latter to different types of aromatic substances and beverages, with minimal constructive changes.

The aforementioned goal is solved by means of a capsule, produced in a substantially flexible or rigid material, and substantially gas un-tight or gastight, containing at least one aromatic substance, for production of a beverage by means of its crossing by a pressurized fluid flow, whereby said capsule is built by at least one construction element defining at least one zone of capsule facing the flow upstream and a zone of capsule facing the flow downstream disposed in opposition between each other, and presenting an actuation element that extends over part, preferentially a substantial part, of the distance between the zones facing the flow upstream and downstream, and retained in a removable manner in a respective element fixture, provided in each case in said zones facing the flow upstream and downstream. According to a first inventive aspect, said actuation element and respective element fixture are configures in such a way that they include and/or define a flow accumulation chamber on the side of the zone facing the flow downstream, and at least one previously defined flow passageway of exit, for flow discharge out of said accumulation chamber and out of the capsule. In terms of the mechanism of forces, this discharge unfolds at least in part, as a result of the flow accumulation in said flow accumulation chamber.

According to another inventive aspect, said actuation element executes at least two successive displacements, in each case as a result of the application of a certain actuation force, in each case resulting in at least one previously defined flow passageway for the flow to entry in the capsule, and said, at least one, previously defined flow passage out of the capsule, respectively.

According to another inventive aspect, as a result of the displacement of the actuation element there is released at least one previously defined flow passageway for the flow to enter inside the accumulation chamber.

In this sense, the present invention points to advantageous configurations of the actuation element and respective element fixture, in view of the respective actuation effectiveness and simplicity of the construction means involved.

According to another inventive aspect, the actuation element and/or the element fixture are therefore advantageously provided with at least one, preferentially a plurality of passageways and/or at least one permeable material and/or with filtering effect, whereby at least the flow passageways through the accumulation chamber are preferentially made available when said passageways, provided in each case in the actuation element and/or element fixture, are in each case un-obstructed or get in substantial fluid communication with each other.

According to another inventive aspect, the parts of the actuation element are configured so as to interact at least temporarily with each other, preferentially so that they move in isolation relative to the other, along at least part of the distance between the zone facing upstream flow and the zone facing downstream flow.

Further within this scope, according to a preferred embodiment, the actuation element is provided in two actuation parts, each being retained at least initially by at least one respective removable union, preferentially in an union by means of positive locking. Moreover, at least the one part of the actuation element on the side of the zone facing the flow downstream, is retained so that it can be displaced in a respective element fixture, preferentially by means of two unions disposed successively along the prevailing flow direction, whereby at least the first thereof is configured as a removable union.

One other goal of the present invention is to be able to adjust said capsule to the use of different types of substances, different average dimension of respective grains and different quantity of beverage to be produced, only by means of a variation of the configuration and/or previous dimensioning of said actuation element, thereby always ensuring a high extraction efficacy.

This goal is solved according to an inventive aspect in such way that the total displacement of the actuation element and/or the volume of the accumulation chamber, preferentially the respective interior height, are previously defined as a function at least of the type of aromatic substance, or of the dimension of the grain of said substance, or of the interior volume of the capsule.

According to another inventive aspect, the configuration at least of the flow passages of entry n the accumulation chamber and of exit from the capsule, preferentially including the form, the dimension and/or the distribution of respective passageways, is previously defined as a function at least of the type of aromatic substance and/or of the dimension of the grain of said substance and/or of the interior volume of the capsule.

According to a preferred embodiment, and so as to increase the options of control upon the residence period of the flow inside the capsule, notably in view of different aromatic substances, there are provided at least two flow passages, at least in the exit chamber of the actuation element and in the exit cavity, respectively, which result in substantial fluid communication with each other as a result of removing one removable union.

According to a preferred embodiment, the flow passages are provided in the form of a plurality of passageways and/or of a liquid permeable material and/or with filtering effect. Preferred embodiments of such material include materials with a fibre-based structure, preferentially biodegradable materials.

One other goal of the invention is to provide a certain flow pattern inside the capsule, in view of higher effectiveness of extraction of the aromatic substance in its interior.

To this purpose, according to another inventive aspect, it is provided a plurality of flow passages, disposed successively along the prevailing flow direction, whereby the distance between successive flow passages is previously dimensioned and the respective passageways develop in a substantially uniform manner radially, preferentially in asymmetric manner radially, relative to the central symmetry axis of the capsule.

According to another inventive aspect, the parts of the actuation element are provided so that at least one may move at least partially along the other, or at least one may move along at least part of the respective element fixture, at least along the flow prevailing direction.

According to a preferred embodiment, the extension of the actuation element, preferentially at least of the part of the actuation element disposed on the side of the zone facing the flow upstream, is previously defined as a function at least of the type of aromatic substance and/or of the measured dimension of the grain and/or of the global volume of the capsule.

According to another preferred embodiment, the capsule is provided with identification means of a certain previously defined operating position, in particular of a certain relative orientation when the crossing flow should be carried out along a substantially horizontal direction, such as for example so that an identifying element is facing upwards.

One other goal of the present invention is to provide a method of production of an aromatic beverage from a capsule according to the present invention.

The goal above is solved by means of a method comprising the steps of introducing a capsule into an extraction chamber, mechanical fixation clamping of the capsule in the extraction chamber, that way exerting a first actuation force upon the actuation element, at least on the side of the zone facing the flow upstream, of injecting a fluid flow under a previously defined pressure and during a period of time, thereby exerting a second actuation force upon the actuation element, at least on the side of the zone facing the flow downstream, so that the first force of actuation is sufficient to displace the actuation element in such a way that at least reduces the second actuation force, still necessary to provide a flow passage out of the capsule.

According to another inventive aspect, by means of the mechanical clamping of the capsule in the extraction chamber, at least part of the first actuation force applied upon the actuation element disposed on the side of the zone facing the flow upstream, is transmitted by the latter to the actuation element disposed on the side of the zone facing the flow downstream, so that the latter is displaced out of its initial retention.

According to another preferred embodiment, after beginning the injection of pressurized fluid flow the latter is immediately introduced inside the capsule through a flow passage.

According to another preferred embodiment, by means of the mechanical clamping of the capsule in the extraction chamber, the actuation elements are displaced from an initial blocking situation to a following situation of opening of at least one in each case respective flow passage.

According to another preferred embodiment, by means of crossing the capsule, the pressurized fluid flow accumulates at least during a certain period in the accumulation chamber, thereby exerting an increasing hydraulic actuation force upon the actuation element disposed on the side of the zone facing the flow downstream, until reaching a minimum value that provokes the displacement of the actuation element and that way releases at least one respective flow passage.

According to another preferred embodiment of the method according to the invention, the capsule is introduced along a previously defined orientation inside the extraction chamber, preferentially so that the flow passage out of the capsule results oriented downwards.

One other goal of the present invention is to provide a beverage extraction device, whereby this goal is solved by means of a device for use of a capsule according to the invention that comprises at least one extraction chamber for executing the method according to the invention.

### Description of the Drawings

The invention shall now be explained in greater detail based upon preferred embodiments and upon the attached Figures.

The Figures show:
- Figures 1a - 1b:: views in top view, side view and bottom view, respectively, of a recipient of the type capsule (1) and pod (1') according to the invention, including one entry and exit actuation element (5) simultaneously retained in a zone (2) facing the flow upstream and in a zone (3) facing the flow downstream of said capsule;
- Figures 2a - 2b:: schematic representation in cut, along the AA plane identified in Figures 1, of a first type of embodiments of a capsule (1) according to the invention, including the evolution of an actuation element (5) that moves inside the capsule (1), in particular in an element fixture (7s) with a cavity form on the zone (3) facing the flow downstream;
- Figure 3:: schematic representation in cut, along the AA plane, of a second embodiment of a capsule (1) according to the invention, including three successive moments of evolution of an actuation element (5e, 5s) in an element fixture (7);
- Figure 4:: schematic diagram of the evolution of three moments of an embodiment of the method of processing according to the invention.

### Detailed Description of the Invention

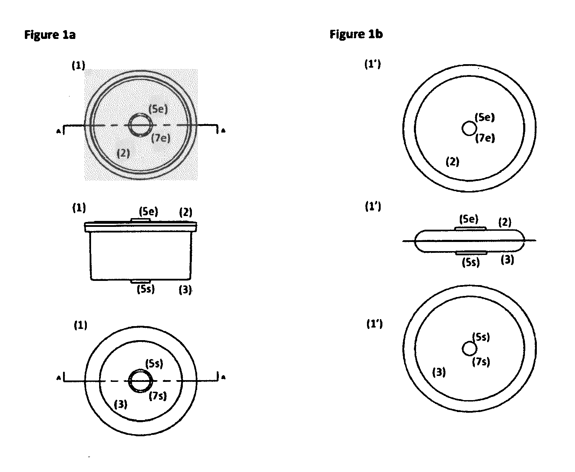

Figures 1a - 1b are outside views of two representative embodiments, for illustrative purpose and non-limiting of the scope of the invention, of a recipient of the type capsule (1, 1') according to the invention. In a first case (Figure 1a), it is a capsule (1) configured in form of a box and produced in a substantially rigid and gastight material, and in another illustrative case (Figure 1b), it is a capsule (1') configured in form of a pod and produced in a substantially flexible and gas un-tight material.

This type of capsules (1, 1') collects an aromatic substance in its interior and is meant for the production of an aromatic beverage by means of its crossing by a pressurized fluid flow, such as for example hot water. Typically, the capsule (1) comprises at least one, preferentially two construction elements, in particular in this case one element of the container type and one element of the lid type, that define at least one zone (2) facing the flow upstream and one zone (3) facing the flow downstream.

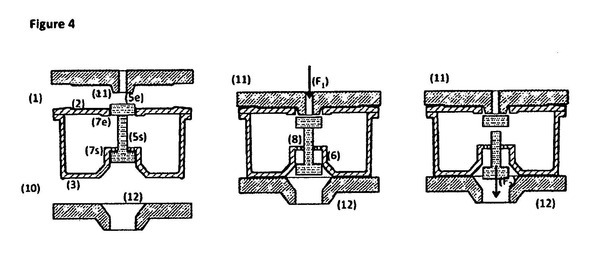

In the case of the present invention, the capsule (1, 1') further includes at least one actuation element (5) disposed in its interior so that it is retained in a removable manner, preferentially in an airtight manner under pressure, in a respective element fixture (7) disposed in each case both in the zone (2) of upstream flow as well as in the zone (3) of downstream flow. The capsule (1, 1') is processed by a respective device by means of its placement inside an extraction chamber (10) with the zone (2) of upstream flow oriented to a fluid injection (11) that feeds the pressurized flow to the interior of the capsule (1, 1'), and the zone (3) of downstream flow facing an infusion discharge (12) that gathers the flow from the interior of the capsule (1, 1') - vide Figures 4.

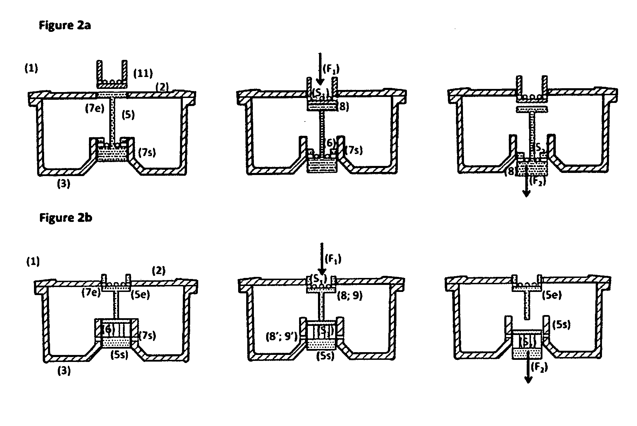

Figures 2a and 2b correspond to views in cut of two embodiments, respectively, each thereof corresponding to one of three successive moments of extraction of a capsule (1, 1') according to the present invention. In the case of this set of embodiments, the element fixture (7) is provided in two distinct parts (7e, 7s), whereby the element fixture (7s) disposed on the exit side is preferentially configured in a cavity form of cylindrical and/or conic tubular format.

In a first example (Figure 2a), the actuation element (5) is thus provided for example in a single piece, initially retained in a removable manner in an element fixture (7e) disposed on the zone (2) facing the flow upstream, and in an element fixture (7s) disposed on the zone (3) facing the flow downstream. On a first moment (left drawing), there is no flow passage through the capsule (1) available. On a second moment (centre drawing), by means of applying a certain first actuation force (F), preferentially exerted at least in a mechanical manner, exerted as an example by the flow injection (11) provided in an extraction chamber (10) of a device according to the invention, the actuation element (5) is displaced so that it is released one flow passage (S₁) allowing the pressurized flow to enter inside the capsule. In the present case, said flow passage (S₁) is provided by a plurality of passageways (8) disposed on said flow injection (11). On a third moment (drawing on the right), by means of the application of a second actuation force (F), eventually of different dimension than the first one, preferentially exerted at least in hydraulic manner (i.e., by means of a fluid), the actuation element (5) is displaced again, so that it is released a second section of flow passage (S₂), in this case allowing the pressurized flow to exit the capsule (1).

In a second example (Figure 2b), the actuation element is provided in two element parts (5e, 5s), each being initially retained in a removable manner in a respective element fixture (7e, 7s), whereby these element parts (5e, 5s) engage at least temporarily with each other. On a first moment (drawing to the left), the actuation element (5e) on the entry is thus retained in a position in which the respective passageways (8) are blocked by the respective element fixture (7e). On a second moment (drawing in the centre), a first actuation force (F₁) is applied upon the actuation element (5e) so that the latter is displaced at least in such an extension that it unblocks the passageways (8) and/or a region of permeable material (9) and/or with filtering effect, provided in the opening element (5e), and a corresponding flow passage (S₁) is thus released of entry inside the capsule (1). Moreover, on the course of its displacement, the actuation element (5e) simultaneously transmits at least part of said first actuation force (F₁) to the actuation element (5s) on the exit. As a result of this engagement, the actuation element (5s) is displaced from a first retention position to a following retention, in this case along such a distance that it unblocks a plurality of passageways (8) and/or zone of liquid permeable material (9) and/or with filtering effect provided in the element fixture (7s), thus releasing a flow passage (S₃) into the interior of an accumulation chamber (6) defined in its interior. On a third moment (drawing to the right), as a result of fluid accumulation in said accumulation chamber (6) it is developed an increasing pressure force inside thereof until a second actuation force (F₂) is exerted, at least by hydraulic way, upon said actuation element (5s) so that the latter moves to a following retention position, thus releasing one flow passage (S₂) from the accumulation chamber (6) and out of the capsule (1).

According to a preferred embodiment of the invention, the volume of the accumulation chamber (6) is previously dimensioned so that a certain hydraulic actuation force (F_{H}) is generated in such a location, corresponding to the actuation force (F) necessary to carry out the displacement of the actuation element (5s).

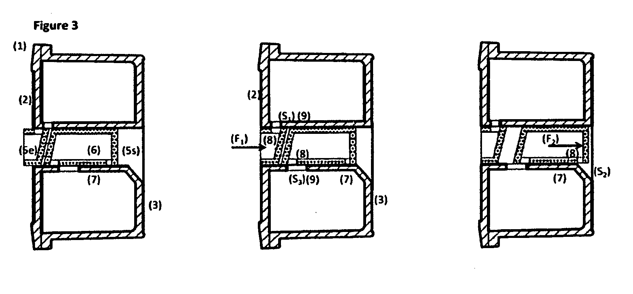

Figure 3 corresponds to a preferred embodiment (again including three drawings, each of which corresponding to successive moments of the operation), in which the capsule (1) is provided with sections of flow passage distributed in asymmetrical manner, at least along a radial direction, so as to improved the resulting flow pattern, in particular when it is crossed by a pressurized flow developing along a substantially horizontal direction. Moreover, in the case of this embodiment, the element fixture (7) is provided in a single piece, of cylindrical and/or conic tubular format, preferentially produced in a single piece with at least one other construction element of the capsule (1).

On a first moment (drawing to the left), the actuation elements (5e, 5s) are retained in such a way in the element fixture (7) that there is no flow passage available through the capsule (1). On a second moment (drawing in the centre), by means of applying a certain first actuation force (F₁), the actuation elements (5e, 5s) are jointly displaced along such a distance that passageways (8) become in fluid communication with respective zones (9) of permeable material provided in each case in the element fixture (7). As a result there are provided flow passages (S₁, S₃) for entry in the capsule and in an accumulation chamber (6) defined in the interior of the actuation element (5s). In this respect, particular attention is called upon the fact that said passageways (8) present a variable dimension and are disposed at certain distances in-between and in asymmetrical manner radially, so that it results a more effective flow distribution through the aromatic substance. In this case, as an example, the openings of the entry in the capsule (1) are disposed in a perimeter zone of the actuation element (5e) that is oriented upwards, whereas the openings of entry in the accumulation chamber (6) are disposed in a perimeter zone of the actuation element (5s) that is oriented downwards. On a third moment, as a result of a second actuation force (F₂), the actuation element (5s) is moved along such an extension that a flow passage (S₂) is released of exit from the capsule (1), in this case provided by a plurality of passageways (8) disposed on a perimeter zone thereof that is oriented downwards, and in the interior of a cavity correspondingly provided in part of the perimeter of the element fixture (7).

Figure 4 are three schematic views of in each case successive moments of a preferred embodiment of the method and device according to the invention. One capsule (1) according to the invention is thus initially introduced in an extraction chamber (10) of a device according to the invention along an indiscriminate orientation, preferentially along a previously defined orientation. According to a preferred embodiment, the introduction takes place so that the actuation element (5e, 5s) on the side upstream and on the side downstream result in each case substantially aligned with a flow infusion element (11) and an infusion discharge element (12), respectively (drawing to the left). In a following step, it is carried out the mechanical clamping of the capsule (1) in a respective extraction position. According to a preferred embodiment, is simultaneously exerted by a first actuation force (F₁) of the actuation element (5) of capsule (drawing in the centre). Afterwards, or substantially simultaneously with the mechanical clamping it is initiated the injection of the pressurized fluid flow, such as for example hot water, through the flow injection (11) of actuation of the actuation element (5) of capsule (1). The opening of a flow passage (S₁) of entry in the capsule may take place immediately after the mechanical clamping, or only after the beginning of the flow injection. On a following moment (drawing on the right), as a result of the entry of flow in the capsule, a second actuation force (F₂) is exerted or generated so that a flow passage (S₂) is released that allows the flow to exit out of the capsule (1).

## Claims

1. Capsule (1, 1') for containing at least one aromatic substance for producing a beverage by means of its crossing by a pressurized fluid flow, said capsule being built by at least one construction element that defines one zone (2) suitable to face the flow upstream and one zone (3) suitable to face the flow downstream disposed in opposition to each other, and presenting one actuation element (5) extending along part, preferentially substantial, of the distance between said zones (2, 3), and retained in removable manner by means of two element parts (5e; 5s), in a respective element fixture (7; 7e, 7s) provided respectively in said zones (2, 3), **characterized in that** the actuation element (5; 5e, 5s) includes and/or defines together with said element fixture (7; 7e, 7s) provided on the side of the zone (3) suitable to face the flow downstream, one flow accumulation chamber (6), and **in that** the actuation element (5; 5e, 5s) includes and/or defines together with said element fixture (7; 7e, 7s), at least one flow exit passage (S₂) for discharge of the flow out of said accumulation chamber (6) and of the capsule (1, 1'), at least in part as a result of flow accumulation in said flow accumulation chamber (6).

2. Capsule according to claim 1, **characterized in that** the actuation element (5; 5e, 5s) can carry out at least two successive displacements, in each case as a result of applying a certain actuation force (F₁, F₂), releasing at least one flow passage (S₁) for entry of the flow inside the capsule (1), and at least one flow passage (S₂) for discharge of the flow out of the capsule (1), respectively.

3. Capsule according to claim 1 or 2, **characterized in that** as a result of the displacement of the actuation element (5; 5e, 5s), at least one flow passage (S₃) can_be released for entry of the flow inside the accumulation chamber (6).

4. Capsule according to claims 2 and 3, **characterized in that** the actuation element (5; 5e, 5s) and/or the element fixture (7; 7e, 7s) are provided with at least one, preferentially a plurality of passageways (8) and/or with at least one permeable material (9) and/or with filtering effect, and **in that** at least the flow passages (S₂, S₃) through the accumulation chamber (6) are provided when said passageways (8) in the actuation element (5; 5e, 5s) and/or in the element fixture (7; 7e, 7s), are in each case un-obstructed or get in substantial fluid communication with each other.

5. Capsule according to any of claims 1 to 4, **characterized in that** the parts (5e, 5s) of the actuation element are configured so as to interact at least temporarily with each other, preferentially so that they move in isolation one relative to the other, along at least part of the distance between the zone (2) of flow upstream and the zone (3) of flow downstream.

6. Capsule according to any of claims 1 to 5, **characterized in that** the total displacement of the actuation element (5; 5e, 5s) and/or the volume of the accumulation chamber (6), preferentially respective interior height, are previously defined as a function of at least one type of aromatic substance, or of the dimension of the grain of said substance or of the interior volume of the capsule (1, 1').

7. Capsule according to any of claims 2 and 3, **characterized in that** the configuration at least of the flow passages of entry (S₂) inside the accumulation chamber (6) and exit (S₃) out of the capsule (1, 1'), including the form, the dimension and the distribution of respective passageways (8), is previously defined as a function at least of the type of aromatic substance, or of the dimension of the grain of said substance, or of the interior volume of the capsule (1, 1').

8. Capsule according to any of claims 1 to 7, **characterized in that** it is provided with a plurality of flow passages (S₁, S₂, S₃, ...) disposed successively along the prevailing flow direction, whereby respective passageways (8) develop radially in a substantially uniform manner, preferentially in asymmetric manner radially, relative to the central symmetry axis of the capsule (1).

9. Capsule according to any of claims 1 to 8, **characterized in that** the parts (5e, 5s) of the actuation element are provided so that at least one may move at least partially along the other, or at least one may move along at least part of a respective element fixture (7), at least along the prevailing flow direction.

10. Capsule according to any of claims 1 to 9, **characterized in that** an extension of the actuation element (5; 5e, 5s), preferentially at least an extension of the element part (5e) on the side of the zone (2) facing the flow upstream, is previously defined as a function at least of the type of aromatic substance, or the average dimension of the grain, or the interior volume of the capsule (1, 1').

11. Method of producing an aromatic beverage from a capsule according to any one of claims 1 to 10, comprising the following steps:
- introducing a capsule (1, 1') according to any of claims 1 to 10 in an extraction (10) chamber,
- fixating said capsule (1, 1') by mechanical clamping in said extraction chamber (10) that way exerting a first actuation force (F₁) upon the actuation element (5; 5e) at least on the side of the zone (2) facing the flow upstream,
- injecting a fluid flow under a previously defined pressure and during a period of time, that way exerting a second actuation force (F₂) upon the actuation element (5; 5s) at least on the side of the zone (3) facing the flow downstream,
**characterized in that** the first actuation force (F₁) is sufficient to displace the actuation force (5; 5e, 5s) in such way that at least reduces the second actuation force (F₂) still necessary to provide a flow passage (S₂) out of the capsule (1, 1').

12. Method according to claim 11, **characterized in that** by means of the mechanical clamping of the capsule (1) in the extraction chamber (10), at least part of the first actuation force (Fi) applied upon the actuation element (5; 5e) on the side of the zone (2) facing the flow upstream, is transmitted by the latter to the actuation element (5; 5s) on the side of the zone (3) facing the flow downstream, so that the latter is displaced out of its initial retention.

13. Method according to any of claims 11 to 12, **characterized in that** by means of the mechanical clamping of the capsule (1, 1') in the extraction chamber (10), the actuation elements (5; 5e, 5s) are displaced from an initial blocking position, to a following retention of opening of at least one respective flow passage (S₁, S₂, S₃).

14. Method according to any of claims 11 to 13, **characterized in that** by means of crossing the capsule (1, 1'), the pressurized fluid flow initially accumulates in the exit chamber (6s), thereby exerting an increasing hydraulic actuation force (F₂) upon the actuation element (5; 5s) disposed on the side of the zone (3) facing downstream, until reaching a value that provokes the displacement of the actuation element (5; 5s) and that way releases at least one respective flow passage (S₃).

15. Method according to any of claims 11 to 14, **characterized in that** the capsule (1, 1') is introduced along a previously defined orientation in the extraction chamber (10), preferentially so that the flow passage (S₃) out of the capsule (1, 1') is oriented downwards.

## Patentansprüche

1. Kapsel (1, 1') enthält mindestens eine aromatische Substanz zur Herstellung eines Getränks durch seine Überquerung durch einen unter Druck stehenden Flüssigkeitsdurchfluss, wobei die genannte Kapsel von mindestens einem Konstruktionselement hergestellt ist, dass einen Bereich (2) definiert und der geeignet ist stromaufwärts zugewandt zu sein, und einen Bereich (3), der geeignet ist stromabwärts zugewandt zu sein, in dem sie sich gegenüber stehen, und die ein Antriebselement (5) hat, das sich entlang teil, vorzugsweise im Wesentlichen, die Entfernung zwischen die genannten Bereiche (2, 3) erstreckt, und bewahrt in ausdehnbarer Weise durch zwei Elementteile (5e; 5s), in einer entsprechenden Elementbefestigung (7; 7e, 7s) in diesen Bereiche (2, 3) bereitgestellt, **dadurch gekennzeichnet dass** das Antriebselement (5; 5e, 5s) zusammen mit genannten Elementbefestigungen (7; 7e, 7s) an der Seite des Bereiches (3), die geeignet ist stromabwärts zugewandt zu sein, eine Durchflussakkumulationskammer (6) beinhaltet und/oder definiert, und dass das Antriebselement (5; 5e, 5s) zusammen mit genanntem Befestigungselement (7; 7e, 7s) zumindest eine Durchflussausgangspassage (S₂) beinhaltet und/oder definiert für Entlastung des Durchflusses aus genannter Akkumulationskammer (6) und aus der Kapsel (1, 1'), zumindest teilweise wegen eines Akkumulationsflusses in genannter Akkumulationskammer (6).

2. Kapsel nach Anspruch 1, **dadurch gekennzeichnet dass** das Antriebselement (5; 5e, 5s) mindestens zwei fortlaufende Verlagerungen durchführen kann, in jedem der Fälle durch die Anwendung einer bestimmten Antriebskraft (F₁, F₂), in dem zumindest ein Durchfluss (S₁) befreit wird für die Eingabe des Durchflusses innerhalb der Kapsel (1), und entsprechend zumindest ein Durchfluss (S₂) für den Durchfluss außerhalb der Kapsel (1).

3. Kapsel nach Ansprüche 1 oder 2, **dadurch gekennzeichnet dass** durch die Verlagerung des Antriebselements (5; 5e, 5s), zumindest ein Durchfluss (S₃) für Eingang des Durchflusses innerhalb der Akkumulationskammer (6) befreit werden kann.

4. Kapsel nach Ansprüche 2 und 3, **dadurch gekennzeichnet dass** das Antriebselement (5; 5e, 5s), und/oder des Befestigungselements (7; 7e, 7s) mit zumindest einen bevorzugt einer Vielheit von Durchflüssen (8) und/oder zumindest eines durchlässiges Material (9) und/oder eines Filtereffektes versorgt ist, und dass zumindest die Durchflüsse (S₂, S₃) durch die Akkumulationskammer (6) versorgt sind, wenn genannte Durchgänge (8) im Antriebselement (5; 5e, 5s) und/oder im Befestigungselement (7; 7e, 7s) in jedem Fall unbehindert sind oder im Wesentlichen in flüssigsolider Verbindung mit einander stehen.

5. Kapsel nach einer der Ansprüche 1 bis 4, **dadurch gekennzeichnet dass** die Teile (5e, 5s) des Antriebselements so gestaltet sind, dass beide Teile miteinander zumindest vorübergehend interagieren, bevorzugt dass sie sich in der Isolation ein relativ zum anderen bewegen, zumindest entlang des Entfernungsparts zwischen den stromaufwärts zugewandten Bereich (2) und den stromabwärts zugewandten Bereich (3).

6. Kapsel nach einer der Ansprüche 1 bis 5, **dadurch gekennzeichnet dass** die komplette Verlagerung des Antriebselements (5; 5e, 5s) und/ oder das Volumen der Akkumulationskammer (6), bevorzugt die entsprechende innere Höhe, als eine Funktion von mindestens einem Typ einer aromatischen Substanz, oder der Dimension des Kernes der genannten Substanz oder des Innenvolumens der Kapsel (1, 1')vordefiniert sind.

7. Kapsel nach einer der Ansprüche 2 und 3, **dadurch gekennzeichnet dass** die Konfiguration zumindest der Durchflüsse des Einganges (S₂) in die Akkumulationskammer (6) und Ausganges (S₃) aus der Kapsel (1, 1'), einschließlich die Form, die Dimension und die Verteilung der entsprechenden Durchgänge (8), vordefiniert wurde als Funktion von mindestens einem Typ einer aromatischen Substanz, oder der Dimension des Kernes der genannten Substanz oder des Innenvolumens der Kapsel (1, 1').

8. Kapsel nach einer der Ansprüche 1 bis 7, **dadurch gekennzeichnet dass** es mit einer Vielheit von Durchflüssen (S₁, S₂, S₃, ...), die nacheinander entlang der vorherrschenden Strömungsrichtung angeordnet sind, vorgesehen ist, wobei die entsprechenden Durchgänge (8) sich strahlig in einer soliden Weise, bevorzugt strahlig in asymmetrischer Weise, abhängig von der symmetrischen Zentralachse der Kapsel (1) entwickeln.

9. Kapsel nach einer der Ansprüche 1 bis 8, **dadurch gekennzeichnet dass** der Teile (5e, 5s) des Antriebselements so vorgesehen sind dass mindestens eins teilweise entlang des anderen, oder mindestens eins entlang mindestens teil eines entsprechenden Befestigungselements (7) sich bewegen kann, zumindest entlang der vorherrschenden Strömungsrichtung.

10. Kapsel nach einer der Ansprüche 1 bis 9, **dadurch gekennzeichnet dass** eine Erweiterung des Antriebselements (5; 5e, 5s), bevorzugt zumindest eine Erweiterung des Teilelements (5e) an der Seite des stromaufwärts zugewandten Bereiches (2), als Funktion von mindestens einem Typ einer aromatischen Substanz, oder der Durchschnittsdimension des Kernes oder des Innenvolumens der Kapsel (1, 1') vordefiniert ist.

11. Produktionsverfahren einer aromatischen Getränkes von einer Kapsel nach einer der Ansprüche 1 bis 10 umfassend folgende Schritte:
- Einführung einer Kapsel (1, 1') nach einer der Ansprüche 1 bis 10 in einer Extraktionskammer (10),
- Fixierung der genannten Kapsel (1, 1') durch mechanische Einspannung in gesagte Extraktionskammer (10), so dass eine erste Antriebskraft (F₁) auf das Antriebselement (5; 5e) zumindest an der Seite des stromaufwärts zugewandten Bereiches (2) ausgeübt wird,
- Einspritzen eines Flüssigkeitsflusses unter vordefiniertem Druck und innerhalb eines Zeitraumes, so dass eine zweite Antriebskraft (F₂) auf das Antriebselement (5; 5e) zumindest an der Seite des stromabwärts zugewandten Bereiches (3) ausgeübt wird,
**dadurch gekennzeichnet dass** die erste Antriebskraft (F₁) genug ist, um die Antriebskraft (5; 5e, 5s) zu verlagern und zwar so, zumindest die zweite Antriebskraft (F₂) zu verringern, aber noch erforderlich, um einen Durchgang (S₂) aus der Kapsel (1, 1') vorzuzehen.

12. Verfahren nach Anspruch 11, **dadurch gekennzeichnet dass** durch die mechanische Einspannung der Kapsel (1) in die Extraktionskammer (10), mindestens ein Teil der ersten Antriebskraft (F₁) auf das Antriebselement (5; 5e) an der Seite des stromaufwärts zugewandten Bereiches (2) ausgeübt ist und von diesem letzten zum Antriebselement (5; 5e) an der Seite des stromabwärts zugewandten Bereiches (3) überliefert ist, so dass das letzte aus seiner ursprünglichen Aufbewahrung verlagert ist.

13. Verfahren nach einer der Ansprüche 11 bis 12, **dadurch gekennzeichnet dass** die Antriebselemente (5; 5e, 5s) durch die mechanische Einspannung der Kapsel (1, 1') in die Extraktionskammer (10) von ihrer ursprünglichen Blockposition zur folgenden Aufbewahrung vom Aufklappen zumindest einem entsprechenden Durchfluss (S₁, S₂, S₃) verlagert werden.

14. Verfahren nach einer der Ansprüche 11 bis 13, **dadurch gekennzeichnet dass** durch die Überquerung der Kapsel (1, 1') der unter Druck stehende Flüssigkeitsdurchfluss erstens in die Extraktionskammer (6) sammelt, dabei wird eine wachsende hydraulische Antriebskraft (F₂) auf das Antriebselement (5; 5s), das an der Seite des stromabwärts zugewandten Bereiches (3) angeordnet ist, ausgeübt bis ein Wert erreicht wurde, der die Verlagerung des Antriebelements (5; 5e) ausgelöst und der somit zumindest ein entsprechender Durchfluss (S₃) befreit.

15. Verfahren nach einer der Ansprüche 11 bis 14, **dadurch gekennzeichnet dass** die Kapsel (1, 1') entlang einer vordefinierten Richtung in die Extraktionskammer (10) eingeführt ist, bevorzugt dass der Durchgang (S₃) außerhalb der Kapsel (1, 1') abwärts gerichtet ist.

## Revendications

1. Capsule (1, 1') pour contenir au moins une substance aromatique pour la fabrication d'un boisson au moyen de son passage par un flux liquide pressurisé, la dite capsule étant réalisée au moins par un élément de construction qui définit une zone (2) apte à faire face au flux en amont et une zone (3) apte à faire face au flux en aval disposées, en opposition l'une à l'autre, et en présentant un élément d'actionnement (5) s'étendant le long d'une partie, préférentiellement substantiel, de la distance entre les dites zones (2, 3), et retenue de façon amovible au moyen de deux portions des éléments (5e; 5s), sur le respectif élément de fixation (7; 7e, 7s) prévu respectivement sur les dites zones (2,3), **caractérisée en ce que** l'élément d'actionnement (5; 5e, 5s) est compris et/ou est définit ensemble avec le dit élément de fixation (7; 7e, 7s), pourvu du côté de la zone (3) apte à faire face au flux en aval, une chambre d'accumulation de flux (6), et **en ce que** l'élément d'actionnement (5; 5e, 5s) est compris e/ou est définit ensemble avec le dit élément de fixation (7; 7e, 7s), au moins un passage de flux de sortie (S₂) pour l'écoulement du flux à l'extérieur de la dite chambre d'accumulation (6) et de la capsule (1, 1'), au moins partiellement comme résultat de l'accumulation de flux dans la dit chambre d'accumulation de flux (6).

2. Capsule selon la revendication 1, **caractérisée en ce que** l'élément d'actionnement (5; 5e, 5s) peut réaliser au moins deux déplacements successifs, dans ce cas étant le résultat de l'application d'une certaine force d'actionnement (F₁, F₂), dégageant au moins un passage de flux (S₁) pour l'entrée du flux dans la capsule (1), et au moins un passage de flux (S₂) pour la décharge du flux respectivement à l'extérieur de la capsule (1).

3. Capsule selon les revendications 1 ou 2 **caractérisée en ce que** à la suite du déplacement de l'élément d'actionnement (5; 5e, 5s) au moins un passage de flux (S₃) peut se dégager pour l'entrée du flux dans la chambre d'accumulation (6).

4. Capsule selon les revendications 2 et 3, **caractérisée en ce que** l'élément d'actionnement (5; 5e, 5s) et/ou l'élément de fixation (7; 7e, 7s) au moins sont pourvus d'un, de préférence d'une pluralité de voies (8) et/ou au moins d'un matériau perméable (9) et/ou d' un effet de filtrage, et **en ce qu'** au moins les passages de flux (S₂, S₃) par la chambre d'accumulation (6) sont fournis quand les dites voies (8) sur l'élément d'actionnement (5; 5e, 5s) et/ou sur l'élément de fixation (7; 7e, 7s), sont dans ce cas désobstruées ou entrer dans une communication de fluide substantiel l'une avec l'autre.

5. Capsule selon l'une quelconque des revendications 1 à 4, **caractérisée en ce que** les pièces (5e, 5s) de l'élément d'actionnement sont configurées à interagir au moins temporairement l'une et l'autre de préférence de sorte qu'elles se déplacent en isolement une par rapport à l'autre, le long d'une partie de la distance parmi la zone (2) du flux en amont et la zone (3) du flux en aval.

6. Capsule selon l'une quelconque des revendications 1 à 5, **caractérisée en ce que** tout le déplacement de l'élément d'actionnement (5; 5e, 5s) et/ou le volume de la chambre d'accumulation (6), de préférence sa respective hauteur intérieure, sont préalablement définis, comme une fonction au moins avec un type de substance aromatique, soit de la dimension du grain de la dite substance soit du volume intérieur de la capsule (1, 1').

7. Capsule selon l'une quelconque des revendications 2 et 3, **caractérisée en ce qu'** au moins la configuration du passage de flux de l'entrée (S₂) vers l'intérieur de la chambre d'accumulation (6) et de la sortie (S₃) vers l'extérieur de la capsule (1, 1'), comprenant la forme, la dimension et la distribution des voies respectifs (8), est défini précédemment au moins comme une fonction du type de substance aromatique, ou de la dimension du grain de cette dite substance, ou du volume intérieur de la capsule (1,1').

8. Capsule selon l'une quelconque des revendications 2 à 7, **caractérisée en ce qu'**elle est pourvue d'une pluralité de passages de flux (S₁, S₂, S₃, ...) disposés successivement le long de la direction prédominante de flux, par laquelle les respectives voies (8) se développent radialement d'une façon substantiellement uniforme, de préférence sous une forme asymétrique radial, par rapport à l'axe central de symétrie de la capsule (1).

9. Capsule selon l'une quelconque des revendications 1 à 8, **caractérisée en ce que** les pièces (5e, 5s) de l'élément d'actionnement sont pourvues de sorte qu'au moins un élément se déplace au moins partiellement le long de l'autre, ou au moins un se déplace au moins le long d'une partie du respectif élément de fixation (7), au moins le long de la direction prédominante de flux.

10. Capsule selon l'une quelconque des revendications 1 à 9, **caractérisée en ce que** l'extension de l'élément d'actionnement (5; 5e, 5s), de préférence au moins l'extension de la portion de l'élément (5e) à côté de la zone (2) en face du flux en amont, est définie précédemment comme une fonction au moins du type de substance aromatique, ou de la dimension moyenne du grain, ou du volume intérieur de la capsule (1, 1').

11. Procédé de fabrication d'une boisson aromatique à partir d'une capsule selon l'une quelconque des revendications 1 à 10, comprenant les étapes suivantes:
- introduction d'une capsule (1, 1') selon l'une quelconque des revendications 1 à 10 dans une chambre d'extraction (10),
- fixation de la dite capsule (1, 1') par fixage mécanique, sur la dite chambre d'extraction (10) en pratiquant une première force d'actionnement (F₁) au moyen de l'élément d'actionnement (5; 5e) au moins du côté de la zone (2) en face du flux en amont,
- injection d'un flux de fluide sous une pression définie au préalable et pendant quelque temps, en pratiquant une deuxième force d'actionnement (F₂) au moyen d'un élément d'actionnement (5; 5s) au moins du côté de la zone (3) en face du flux en aval,
**caractérisé en ce que** la première force d'actionnement (F₁) est suffisante pour déplacer la force d'actionnement (5; 5e, 5s) de telle façon qu' elle réduit au moins la deuxième force d'actionnement (F₂) encore nécessaire pour prévoir le passage du flux (S₂) à l'extérieur de la capsule (1, 1').

12. Procédé selon la revendication 11, **caractérisé en ce que** par le fixage mécanique de la capsule (1) sur la chambre d'extraction (10), au moins une partie de la première force d'actionnement (F₁) appliquée par l'élément d'actionnement (5; 5e) du côté de la zone (2) en face du flux en amont, est transmise par cette dernière à l'élément d'actionnement (5; 5s) du côté de la zone (3) en face du flux en aval, de sorte que ce dernier est déplacé à l'extérieur de la rétention initiale.

13. Procédé selon l'une quelconque des revendications 11 à 12, **caractérisé en ce que** par le fixage mécanique de la capsule (1, 1') dans la chambre d'extraction (10) les éléments d'actionnement (5; 5e, 5s) sont déplacés d'une position initial de blocage vers une suite de rétention ouvrant au moins un passage de flux respectif (S₁, S₂, S₃).

14. Procédé selon l'une quelconque des revendications 11 à 13, **caractérisé en ce que** par le moyen du passage de la capsule (1, 1'), le flux de fluide pressurisé accumule initialement à la chambre de sortie (6s), exerçant de cette façon une croissance de la force d'action hydraulique (F₂) sur l'élément d'actionnement (5; 5s) disposé au côté de la zone (3) sur la face en amont, jusqu'à atteindre une valeur qui provoque le déplacement de l'élément d'actionnement (5; 5s) et ainsi dégage au moins une passage de flux respectif (S₃).

15. Procédé selon l'une des revendications 11 à 14, **caractérisé en ce que** la capsule (1, 1') est introduite avec une orientation définie au préalable dans la chambre d'extraction (10), préférentiellement de sorte que le passage de flux (S₃) à l'extérieur de la capsule (1, 1') soit disposé vers le bas.
